# EUROPÄISCHE PATENTSCHRIFT

(11) **EP 1 007 399 B1**
(45) Veröffentlichungstag und Bekanntmachung des Hinweises auf die Patenterteilung: **13.02.2002**
(21) Anmeldenummer: 98940209.4
(22) Anmeldetag: 10.07.1998
(51) Int. Cl.: B62D 23/00, B62D 25/08

(54) **SELBSTTRAGENDE KAROSSERIE FÜR EIN FAHRZEUG**
INTEGRAL BODY AND FRAME FOR AN AUTOMOBILE
CARROSSERIE AUTO-PORTEUSE D'UN VEHICULE

(30) Priorität: 29.08.1997 DE 19737740
(43) Veröffentlichungstag der Anmeldung: 14.06.2000
(73) Patentinhaber: Volkswagen Aktiengesellschaft, 38436 Wolfsburg (DE)
(72) Erfinder: HILLMANN, Jürgen, D-38518 Gifhorn (DE); MORSCH, Klaus-Dieter, D-38124 Braunschweig (DE)
(86) Internationale Anmeldenummer: EP9804314
(87) Internationale Veröffentlichungsnummer: WO9911504

(56) Entgegenhaltungen:
- EP-A- 0 676 316
- FR-A- 2 076 402
- FR-A- 2 718 408

## Beschreibung

Die Erfindung betrifft eine selbsttragende Karosserie für ein Fahrzeug gemäß dem Oberbegriff des Patentanspruchs 1.

Eine gattungsgemäße Karosserie ist bekannt geworden durch die DE 44 45 327-C1 (B62D25/08). Dort wird durch eine besondere Konfiguration von Blechpreßformteilen im Heckbereich von Fahrzeugen eine hohe Torsionssteifigkeit dadurch erzielt, daß im Bereich einer Hutablage ein Hohlprofilrahmen durch Zusammensetzen von Blechprofilteilen erzeugt wird.

Ausgehend von diesem Stand der Technik liegt der Erfindung die Aufgabe zugrunde, die Torsionssteifigkeit und/oder die Torsionseigenfrequenzen in Kraftfahrzeugen weiter zu verbessern.

Diese Aufgabe wird gelöst mit einer selbsttragenden Karosserie gemäß den Merkmalen des Patentanspruchs 1. Die Unteransprüche betreffen besonders zweckmäßige Weiterbildungen der Erfindung.

Erfindungsgemäß wird also eine Anordnung aus zwei U-Rahmen vorgesehen, die in Fahrzeuglängsrichtung hintereinander angeordnet sind. Die Bodenabschnitte dieser U-Rahmen sind einem Dachbereich oder wie beim Stand der Technik einem Bodenbereich der Karosserie zugeordnet. Die Wangenabschnitte erstrecken sich abweichend vom Stand der Technik allerdings vom Bodenbereich bis in vertikale Säulen (insbesondere sogenannte C- und/oder D-Säulen) hinein und reichen zumindest bis an den Dachbereich oder bei einem im Dachbereich angeordneten Bodenabschnitt des U-Rahmens in den Bodenbereich hinein. Mit dieser Konzeption wird also der überwiegende Teil eines ausgesuchten Karosseriequerschnittes in sich versteift und nicht nur wie beim Stand der Technik ein dem Bodenbereich zugewandter Teilbereich. Die hier vorgeschlagene Maßnahme bringt eine nennenswerte Erhöhung der Torsionssteifigkeit bei relativ geringem Materialeinsatz, weil die in den sogenannten Versteifungsring bzw. Versteifungsrahmen einbezogenen Säulen ohnehin schon als hohe Profilträgerteile ausgebildet sind. Lediglich in Übergangsbereichen von den Säulen zu Radhausschalen sind als Aufsatzteile ausgebildete Blechpreßteile zu ergänzen. Auf diese Weise kann ein Kraftfluß von der Dachlinie bis zum Bodenbereich hergestellt werden. Ein besonderer Versteifungseffekt wird zusätzlich aber noch dadurch erzielt, daß die für sich schon eine nennenswerte Erhöhung der Steifigkeit bewirkenden U-Rahmen noch miteinander verbunden werden, damit auch ihre Verdrehbarkeit gegeneinander eingeschränkt ist. Die Verbindung wenigstens zweier U-Rahmen kann entweder durch direktes Zusammenführen der Wangenabschnitte erfolgen oder mittels eines flächigen Seitenwandteils erreicht werden, daß mittels einer Fügetechnik auf die U-Rahmen aufgesetzt ist. Ein solches Seitenwandteil kann beispielsweise eine ohnehin im Kraftfahrzeugbau schon verwendete Seitenscheibe sein, die mittels Klebung an der Karosserie befestigt wird. Die Scheibe trägt also mit dazu bei, daß die relative Verdrehbarkeit der U-Rahmen zueinander eingeschränkt wird.

Ein wesentlicher Vorteil der Erfindung ist darin zu sehen, daß die zusätzlich einzubringenden Blechpreßteile ohne Komforteinbußen (beispielsweise Durchladebreite, Geräumigkeit für Insassen etc.) gegenüber konventionellen Karosserien angeordnet werden können. Sämtliche dieser Maßnahmen können nämlich unter konventionellen Verkleidungselementen verborgen werden, so daß für den Fahrzeuginsassen die Versteifungsmaßnahmen als solche von außen nicht wahrnehmbar sind und somit auch optisch keinerlei Beeinträchtigung darstellen.

Im übrigen werden mit der Erfindung ergänzend oder alternativ zur Verbesserung der Steifigkeit auch die Torsionseigenfrequenzen der Karosserie günstig beeinflußt.

Hervorzuheben ist auch, daß insbesondere bei Einsatz der sogenannten Tailored-blank-Technik und bei der Verwendung von lnnenhochdruck-Umformteilen gegenüber konventionellen Karosserien die verbesserte Steifigkeit ohne nennenswerten Gewichtszuwachs erreicht werden kann.

Vorteilhafte Ausführungsbeispiele der Erfindung sind in der Zeichnung dargestellt.
Es zeigt
- Figur 1:: Ein erstes Ausführungsbeispiel der Erfindung,
- Figur 2:: ein zweites Ausführungsbeispiel der Erfindung,
- Figur 3:: einen Ausschnitt aus Figur 2 in einer anderen Perspektive,
- Figur 4:: ein drittes Ausführungsbeispiel,
- Figur 5:: ein für die Erfindung besonders hergerichtetes Seitenwandinnenteil und
- Figur 6:: eine Modifikation des in Fig.2 dargestellten Ausführungsbeispiels.

Gleiche Bauteile oder Bauteilabschnitte weisen in allen Figuren die gleichen Bezifferungen auf.

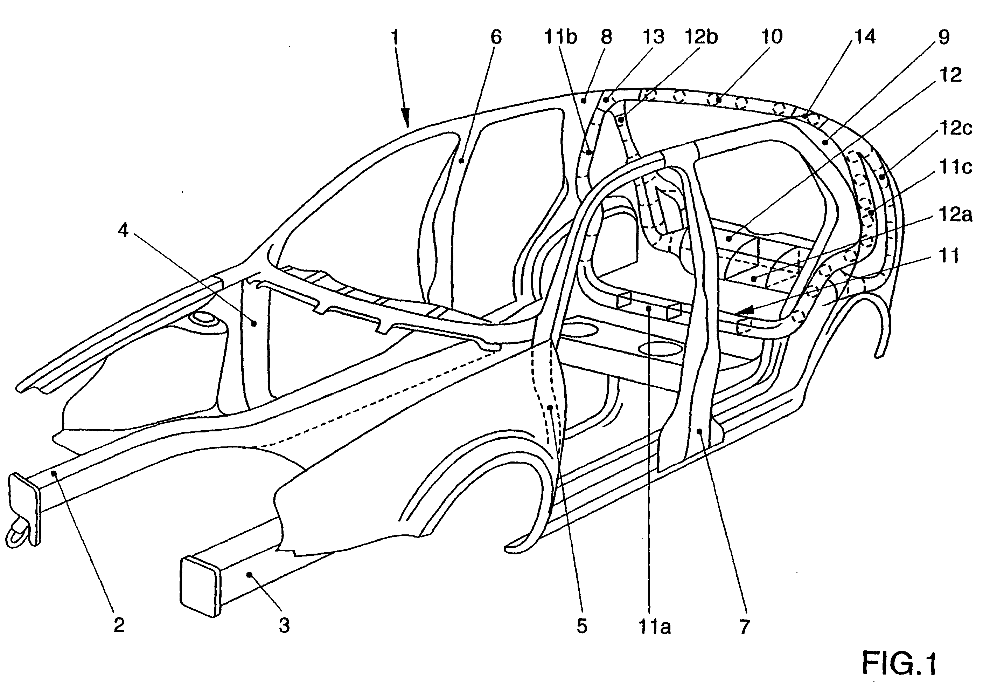

Man erkennt in Figur 1 eine insgesamt mit 1 bezeichnete selbsttragende Karosserie, deren Hohlprofilträgerteile wie beispielsweise Längsträger 2 und 3, A-Säulen 4 und 5, B-Säulen 6 und 7, C-Säulen 8 und 9 oder auch ein Dachquerträger 10 aus Blechpreßteilen, gegebenenfalls auch unter Einsatz der sogenannten Tailored-blank- und/oder Patchwork-Technik, zusammengesetzt sind. Die vorgenannten Hohlprofilträgerteile sind hier nur beispielhaft erwähnt. Verständlicherweise gehören zu einer selbsttragenden Karosserie noch weitere Trägerelemente, die hier aus Gründen der Übersichtlichkeit nicht weiter dargestellt und demzufolge auch nicht weiter benannt werden. Die Hohlprofilträgerteile bilden im Hinblick auf die selbsttragende Karosserie Unterzusammenbauten, die durch unterschiedlichste Fügetechniken aus den einzelnen Blechpreßteilen zusammengesetzt sein können. Vorstellbar sind beispielsweise Punktschweißungen, der Einsatz der sogenannten Clinchtechnik, Laserschweißungen, Verklebungen und auch Mischverbindungen, also der Einsatz unterschiedlicher Fügetechniken an ein und demselben Zusammenbau. Besonders torsionssteif wird die in Figur 1 dargestellte Karosserie 1 durch die nachfolgend näher beschriebenen Maßnahmen. So sind wenigstens zwei U-Rahmen 11 und 12 in Fahrzeuglängsrichtung hintereinander angeordnet. Bodenabschnitte 11a, 12a sind einem hier nicht weiter bezifferten Bodenbereich der Karosserie 1 zugeordnet. Wangenabschnitte 11b, 11c bzw. 12b, 12c erstrecken sich vom Bodenbereich der Karosserie 1 ausgehend in die C-Säulen 8, 9 hinein und reichen bis an das hier nicht weiter dargestellte Dach heran. Bei dem in Figur 1 dargestellten Ausführungsbeispiel sind die freien Enden der Wangenabschnitte 11b, 11c bzw. 12b, 12c direkt aneinander angebunden. In der Seitenansicht spannen also die Wangenabschnitte 11b und 12b bzw. 11c und 12c ein stabiles Dreieck auf. Die Zusammenfassung der oberen Enden der Wangenabschnitte 11b und 12b bzw. 11c und 12c erfolgt hier im Bereich des Dachquerträgers 10, und zwar über hier nur schematisch angedeutete Knotenpunkte 13, 14. Gemäß einer besonders vorteilhaften Weiterbildung der Erfindung ist der Dachquerträger 10 in die aus den beiden U-Rahmen 11, 12 erzeugte Stützkonstruktion eingebunden, so daß sich hier sogar ein vollständig geschlossenes Profil ergibt. Der Dachträger 10 übernimmt damit sozusagen auch die Funktion eines Überrollbügels und erweitert die U-Rahmen 11,12 zu O-Rahmen.

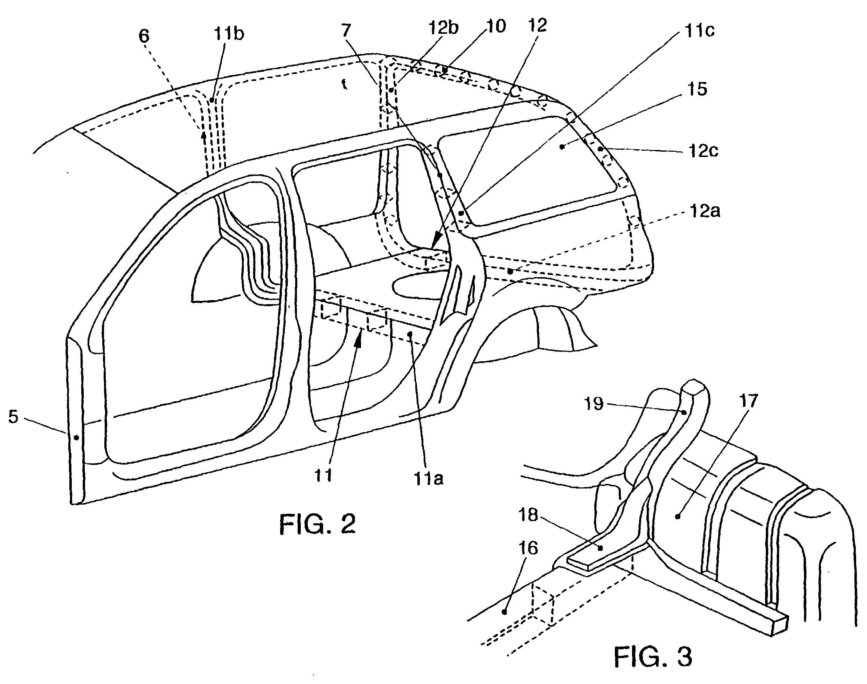

Bei dem in Figur 2 dargestellten Ausführungsbeispiel erfolgt die Verbindung der beiden U-Rahmen 11, 12 über ein flächiges Seitenwandteil. Für sogenannte Kombifahrzeuge ist dies zweckmäßigerweise eine in die Karosserie eingeklebte Fensterscheibe 15. Einklebungen von Fensterscheiben sind im Stand der Technik an sich hinlänglich bekannt und werden hier deshalb nicht näher beschrieben. Mit der Einbindung in die U-Rahmenkonstruktion wird aber durch diese Maßnahme die Tordierbarkeit der U-Rahmen 11, 12 zueinander stark beeinträchtigt, so daß insgesamt die Karosse in sich sehr torsionssteif wird.

Ein wesentlicher Bestandteil der Erfindung ist darin zu sehen, daß die zu den U-Rahmen gehörenden Profilabschnitte zumindest abschnittsweise auch aus Seitenwandteilen gebildet sind. Die für Außen- und/oder Innenhautteile ohnehin benötigten Blechpartien werden also wirkungsvoll in die Tragkonstruktion mit eingebunden. Wichtig in diesem Zusammenhang ist auch, daß die Serienanordnung der U-Rahmen auf unterschiedliche Fahrzeugtypen angewendet werden kann. Für sogenannte Kompaktfahrzeuge bietet sich die in Figur 1 dargestellte Anordnung an. Die U-Rahmen sind also in der Weise aneinander angebunden, daß sich in der Seitenansicht eine Anordnung nach Art eines umgekehrten V ergibt. Für Kombifahrzeuge ist vorteilhafterweise eine U-Rahmenanordnung vorzusehen, bei der die freien Wangenabschnitte in der Seitenansicht im wesentlichen parallel zueinander verlaufen. Für derartige Anordnungen wird ein entscheidender Beitrag zur Torsionssteifigkeit dadurch geliefert, daß sich das die Wangenabschnitte miteinander verbindende Seitenwandteil vom Dachbereich bis zur Gürtellinie des Fahrzeuges erstreckt. Als Gürtellinie wird hierbei im wesentlichen der Verlauf der Fensterunterkante von Fahrzeugen aufgefaßt.

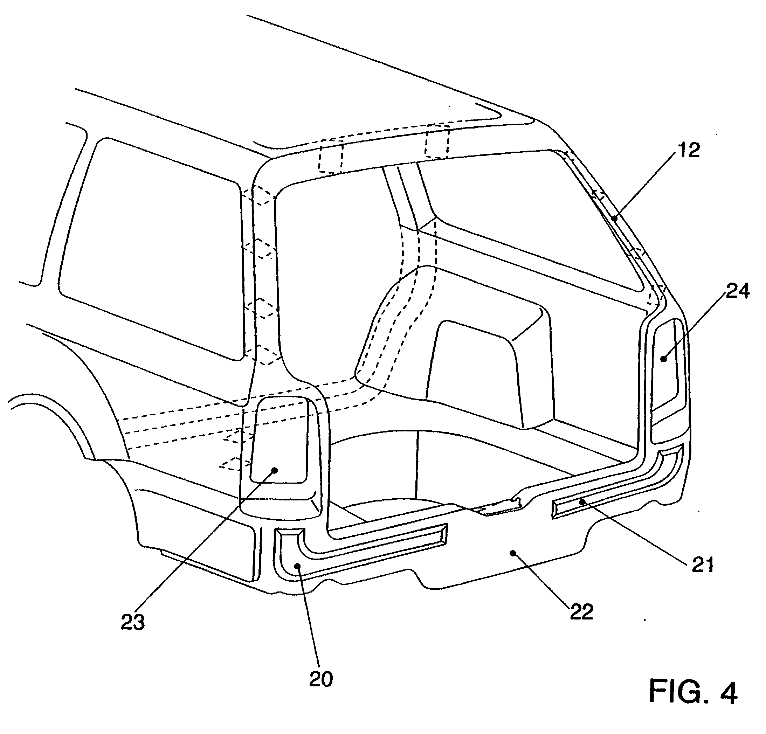

Insbesondere im Mittelbereich der Karosserie 1 sind U-Rahmen wichtig, die nach Art eines Durchlaufträgers gebildet sind. Aus der in Figur 3 dargestellten Ansicht ist entnehmbar, daß ein solcher Durchlaufträger durch die gezielte Anbringung von Aufsatz-Blechpreßteilen erreicht wird. So ist beispielsweise in einem Übergangsbereich zwischen einem hinteren Fahrzeugquerträger 16 (dieser ist integraler Bestandteil des U-Rahmens 11) und einer Radhausschale 17 als Aufsatz-Blechpreßteil ein Winkelprofil 18 vorgesehen, daß über ein Radhausbogenprofil 19 vorzugsweise direkt in die C-Säulen 8, 9 (siehe Figur 1) bzw. B-Säulen 6, 7 (siehe Figur 2) einmündet. Bei geschickter Anordnung dieser Aufsatz-Blechpreßteile 18, 19 werden die Komfortmaße innerhalb der Karosserie in keiner Weise beeinträchtigt, weil in den in der Zeichnung dargestellten Abschnitten in der Regel ohnehin unterhalb von Verkleidungsteilen Hohlräume in der Regel vorzufinden sind. Je nach Fahrzeugkonzept können auch die B-Säulen 6,7 oder C-Säulen 8,9 zusätzlich in sich durch eingeschweißteleingeklebte Einbauprofile oder Blechverstärkungen versteift sein, um beispielsweise zum Radhausbogenprofil 19 hin einen guten Kraftfluß zu gewährleisten.

Ins Karosserieinnere hinein verlegte Aufsatz-Blechpreßteile können beispielsweise auch nach Art eines Ladekantenbleches gebildet werden, wie dies beispielhaft in Figur 1 für den Bodenbereich 12a gezeigt ist. Eine ebensolche Wirkung kann allerdings auch durch Aufsatz-Blechpreßteile 20, 21 erzielt werden, die auf die in Figur 4 dargestellte Weise an einem Heckabschlußblech 22 aufgesetzt sind. Es entstehen auf diese Weise nach außen gerichtete Erhebungen, die durch Stoßfänger optisch wirkungsvoll verdeckt werden können. In besonders vorteilhafter Weise können die Aufsatz-Blechpreßteile 20, 21 auch zur Befestigung der hier nicht weiter dargestellten Stoßfänger hergerichtet sein. Die Aufsatz-Blechpreßteile 20, 21 münden in Heckleuchtenbereiche 23, 24 ein, die hier als Kleinprofilteile ebenfalls integraler Bestandteil des U-Rahmens 12 sind und so keine signifikante Schwachstelle darstellen. Insbesondere bei Karosseriekonstruktionen mit dachseitig geschlossenen U-Profilen kann im Einzelfall eine Unterbrechung der Rahmenkonstruktion akzeptiert werden. Demzufolge befindet sich hier also zwischen den Aufsatz-Blechpreßteilen 20, 21 eine Lücke. Der sich aus der Lücke ergebende Gewichtsvorteil ist bei einzelnen Fahrzeugkonzepten wesentlich höher zu bewerten als die durch Schließung der Lücke gegebenenfalls zu gewinnende Erhöhung der Steifigkeit. Die Verringerung der Steifigkeit aufgrund der Lücke kann falls gewünscht z. B. durch lokale Materialverstärkungen (Einsatz höherfester Materialien, dickerer Bleche o. ä. im Bereich der Lücke) kompensiert werden.

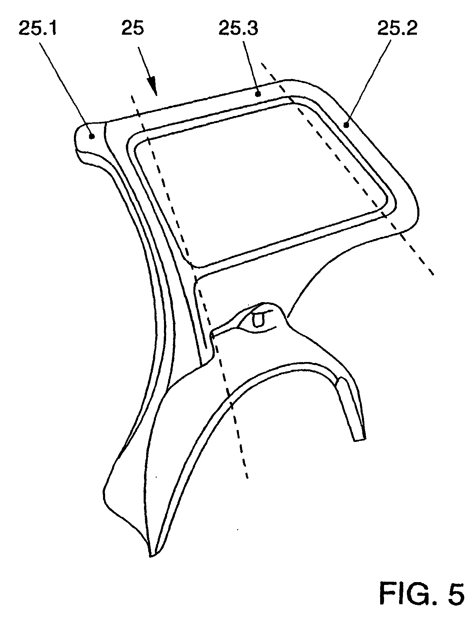

Hervorzuheben ist auch, daß der mit der Verwendung der Aufsatz-Blechpreßteile einhergehende Zusatzaufwand für Material durch Einsatz von Blechtechnik in weniger steifigkeitsrelevanten Karosseriebereichen zumindest teilweise kompensiert werden kann. Besonders gute Wirkungen werden in diesem Zusammenhang durch Einsatz der Tailored-blank- und/oder Patchwork-Technik im Bereich der Seitenwandinnenteile erhalten. Figur 5 zeigt ein Seitenwandinnenteil 25, daß hier im wesentlichen in Tailored-Blank-Technik aus einer Dreifeld-Platine gebildet ist. Die Felder 25.1 und 25.2 weisen beispielsweise eine Blechdicke von 1,2 - 2,0 mm auf. Das dazwischenliegende Dünnblechfeld 25.3 ist demgegenüber nur 0,75 - 1,00 mm stark. Wichtig in diesem Zusammenhang ist auch, daß zudem für die stärkeren Felder 25.1 und 25.2 unterschiedliche, d.h. an die jeweiligen Steifigkeitsanforderungen angepaßte, Blechdicken verwendet werden können. Auch Figur 5 macht deutlich, daß durch die Einbindung des Seiteninnenwandteils 25 als integraler Bestandteil in die U-Rahmen 11 und 12 gerade für großflächige Blechpreßteile kein zusätzlicher Gewichtsaufwand erforderlich ist.

Figur 6 zeigt einen vorzugsweise in Dachspriegelbauweise ausgeführten Dachquerträger 10a, der hier zusammen mit den C-Säulen 8, 9 einen kopfüberstehenden U-Rahmen 11' bildet. Eine vergleichbare Konfiguration kann ergänzend oder alternativ auch mit den A-Säulen 4 und 5, den B-Säulen 6 und 7 sowie mit den für Kombifahrzeugen typischen D-Säulen 26 und 27 erzeugt werden. Auch diese U-Rahmen können durch Anbindung an Bodenquerträger zu O-Rahmen erweitert sein. In diesem Falle könnte die erfindungswesentliche Verbindung der U-Rahmen miteinander beispielsweise über Türschweller 28 erfolgen.

Ein bedeutender Vorteil der Erfindung ist auch darin zu sehen, daß nicht zwangsläufig eine reine Stahlbauweise vorzusehen ist. Einzelne Abschnitte der U-Rahmen können auch durch Leichtbauwerkstoffe wie Aluminium- oder Magnesiumlegierungen gebildet sein. Ebenso denkbar ist der Einsatz von Knotenelementen, die durch Gußtechniken oder Innenhochdruckumformung hergestellt sind.

## Patentansprüche

1. Selbsttragende Karosserie (1) für ein Fahrzeug mit Hohlprofilträgerteilen (2-10), die aus Blechpreßteilen mittels wenigstens einer Fügetechnik zusammengesetzt sind, **dadurch gekennzeichnet, daß**
- wenigstens zwei U-Rahmen (11, 12) in Fahrzeuglängsrichtung hintereinander angeordnet sind,
- Bodenabschnitte (11a, 12a) der U-Rahmen (11, 12) einem Bodenbereich oder einem Dachbereich der Karosserie (1) zugeordnet sind,
- Wangenabschnitte (11b, 11c bzw. 12b, 12c) der U-Rahmen (11, 12) ausgehend vom Bodenbereich bzw. Dachbereich sich in im wesentlichen vertikale Seitenwandsäulen (6-9) hineinerstreckend bis an und/oder in den Dachbereich bzw. Bodenbereich reichend ausgebildet sind,
- die U-Rahmen (11, 12) wenigstens im Bereich der freien Enden der Wangenabschnitte direkt aneinander oder mittels eines flächigen Seitenwand- bzw. Seitenprofilteils (15 bzw. 28), das auf die U-Rahmen (11, 12) zumindest abschnittsweise mittels einer Fügetechnik aufgesetzt ist bzw. diesen als Auflage dient, verbunden sind.

2. Selbsttragende Karosserie nach Anspruch 1, **dadurch gekennzeichnet, daß** im Dachbereich Blechpreßteile der U-Rahmen (11, 12) in der Weise miteinander verbunden sind, daß sich in der Seitenansicht des Fahrzeugs eine Anordnung nach Art eines umgekehrten V ergibt.

3. Selbsttragende Karosserie nach Anspruch 2, **dadurch gekennzeichnet, daß** zumindest Teilbereiche der Wangenabschnitte (11b, 11c bzw. 12b, 12c) in wenigstens eine Seitenwand einer vertikalen Säule (4-9) integriert sind.

4. Selbsttragende Karosserie nach Anspruch 1, **dadurch gekennzeichnet, daß** in der Seitenansicht für die U-Rahmen (11, 12) eine im wesentlichen parallele Anordnung vorgesehen ist.

5. Selbsttragende Karosserie nach Anspruch 4, **dadurch gekennzeichnet, daß** das flächige Seitenwandteil (15) eine vertikale Erstreckung von einer Gürtellinie des Fahrzeugs bis an oder in den Dachbereich hinein aufweist.

6. Selbsttragende Karosserie nach Anspruch 4 oder 5, **dadurch gekennzeichnet, daß** das Seitenwandteil eine Fensterscheibe (15) ist.

7. Selbsttragende Karosserie nach Anspruch 6, **dadurch gekennzeichnet, daß** die Fensterscheibe (15) zumindest auf Teilbereiche der Wangenabschnitte (11b, 11c bzw. 12b, 12c) aufgeklebt ist.

8. Selbsttragende Karosserie nach wenigstens einem der Ansprüche 1-7, **dadurch gekennzeichnet, daß** wenigstens einer der U-Rahmen (11, 12) nach Art eines Durchlaufträgers gebildet ist.

9. Selbsttragende Karosserie nach wenigstens einem der Ansprüche 1-7, **dadurch gekennzeichnet, daß** wenigstens einer der U-Rahmen (11, 12) im Bereich des Bodenabschnitts (11a, 12a) eine Unterbrechung aufweist, deren Länge kleiner ist als die Hälfte der Ausdehnung der Bodenabschnittsmittellinie.

10. Selbsttragende Karosserie nach Anspruch 8, **dadurch gekennzeichnet, daß**
- der Bodenabschnitt (11a) durch einen Fahrzeugquerträger (16) gebildet ist,
- der Wangenabschnitt
= in einem Bereich unterhalb der Gürtellinie durch ein aufgesetztes Blechpreßteil erzeugt ist, das ausgehend von dem Fahrzeugquerträger (16) eine Radhausschale (17) bedeckt in eine der Seitenwandsäulen (6-9) hineinläuft,
= in einem Bereich oberhalb der Gürtellinie durch die Seitenwandsäule (6-9) selbst und/oder darin eingestzte Einbauprofile gebildet ist.

11. Selbsttragende Karosserie nach Anspruch 8 oder 9, **dadurch gekennzeichnet, daß** der Bodenabschnitt und/oder die Wangenabschnitte zumindest teilweise durch Aufsatz-Blechpreßteile (18-21) gebildet sind, die zusammen mit Karosseriewandteilen Hohlprofilträger bilden.

12. Selbsttragende Karosserie nach Anspruch 11, **dadurch gekennzeichnet, daß** die Aufsatz-Blechpreßteile zusammen mit einem Heckabschlußblech (22) Hohlprofilträger bilden.

13. Selbsttragende Karosserie nach Anspruch 12, **dadurch gekennzeichnet, daß** wenigstens eines der Aufsatz-Blechpreßteile in das Karosserieinnere hineinverlegt ist, vorzugsweise nach Art eines Ladekantenbleches.

14. Selbsttragende Karosserie nach Anspruch 12, **dadurch gekennzeichnet, daß** wenigstens eines der Aufsatz-Blechpreßteile von außen auf das Heckabschlußblech (22) aufgesetzt ist.

15. Selbsttragende Karosserie nach Anspruch 14, **dadurch gekennzeichnet, daß** die räumliche Anordnung der Aufsatz-Blechpreßteile (20, 21) so gewählt ist, daß sie von einer Stoßfängeranordnung bedeckbar sind.

16. Selbsttragende Karosserie nach Anspruch 15, **dadurch gekennzeichnet, daß** die Aufsatz-Blechpreßteile (20, 21) zur Aufnahme einer Stoßfängeranordnung hergerichtet sind.

17. Selbsttragende Karosserie nach Anspruch 1 oder 4, **dadurch gekennzeichnet, daß** zumindest Teilbereiche von zwei Wangenabschnitten integraler Bestandteil eines Seitenwandinnenteiles sind.

18. Selbsttragende Karosserie nach Anspruch 17, **dadurch gekennzeichnet, daß**
- das Seitenwandinnenteil (25) in Tailored-blank-Technik ausgeführt ist,
- die den U-Rahmen (11, 12) zugeordneten Blechabschnitte (25.1, 25.2) eine größere Blechdicke und/oder Festigkeit aufweisen als ein zwischen diesen angeordneter Mittelbereich (25.3).

19. Selbsttragende Karosserie wenigstens einem der Ansprüche 1-18, **dadurch gekennzeichnet, daß** wenigstens einer der U-Rahmen (11, 12) im Dachbereich zu einem O-Rahmen erweitert ist.

20. Selbsttragende Karosserie nach Anspruch 19, **dadurch gekennzeichnet, daß** zur Erzeugung des O-Rahmens ein Dachquerträger (10) vorgesehen ist, dessen seitliche Enden zur Befestigung an den freien Enden der Wangenabschnitte (11.b, 11c bzw. 12.b, 12c) hergerichtet sind.

21. Selbsttragende Karosserie nach Anspruch 1, **dadurch gekennzeichnet, daß** der Bodenabschnitt wenigstens eines der U-Rahmen (11,12) durch einen Dachquerträger (10a) gebildet ist.

22. Selbsttragende Karosserie nach Anspruch 1, **dadurch gekennzeichnet, daß** das Seitenwandprofilteil durch einen Schweller (28) gebildet ist.

## Claims

1. Self-supporting body (1) for a vehicle, with hollow-profile member parts (2-10) which are put together from sheet-metal stampings by means of at least one assembly technique, **characterized in that**
- at least two U-frames (11, 12) are arranged one behind the other in the vehicle longitudinal direction,
- bottom portions (11a, 12a) of the U-frames (11, 12) are assigned to a floor region or to a roof region of the body (1),
- cheek portions (11b, 11c and 12b, 12c) of the U-frames (11, 12), starting from the floor region or roof region, are designed to extend into essentially vertical side-wall pillars (6-9) and to reach as far as and/or into the roof region or floor region,
- the U-frames (11, 12), at least in the region of the free ends of the cheek portions, are connected to one another directly or by means of a sheet-like side-wall or side-profile part (15 or 28) which is placed, at least in portions, by means of an assembly technique onto the U-frames (11, 12) or serves as a support for these.

2. Self-supporting body according to Claim 1, **characterized in that**, in the roof region, sheet-metal stampings of the U-frames (11, 12) are connected to one another in such a way that, when the vehicle is seen in the side view, an arrangement in the manner of a reversed V is obtained.

3. Self-supporting body according to Claim 2, **characterized in that** at least part-regions of the cheek portions (11b, 11c and 12b, 12c) are integrated into at least one side wall of a vertical pillar (4-9).

4. Self-supporting body according to Claim 1, **characterized in that**, as seen in the side view, an essential parallel arrangement is provided for the U-frames (11, 12).

5. Self-supporting body according to Claim 4, **characterized in that** the sheet-like side-wall part (15) has a vertical extent from a belt line of the vehicle as far as or into the roof region.

6. Self-supporting body according to Claim 4 or 5, **characterized in that** the side-wall part is a window pane (15).

7. Self-supporting body according to Claim 6, **characterized in that** the window pane (15) is glued at least to part-regions of the cheek portions (11b, 11c and 12b, 12c).

8. Self-supporting body according to at least one of Claims 1-7, **characterized in that** at least one of the U-frames (11, 12) is formed in the manner of a continuous member.

9. Self-supporting body according to at least one of Claims 1-7, **characterized in that** at least one of the U-frames (11, 12) has, in the region of the bottom portion (11a, 12a), an interruption the length of which is smaller than half the extent of the bottom-portion centre line.

10. Self-supporting body according to Claim 8, **characterized in that**
- the bottom portion (11a) is formed by a vehicle crossmember (16),
- the cheek portion
= is produced, in a region below the belt line, by a placed-on sheet-metal stamping which, starting from the vehicle crossmember (16), covers a wheel-house shell (17) and runs into one of the side-wall pillars (6-9),
= is formed, in a region above the belt line, by the side-wall pillar (6-9) itself and/or installation profiles inserted therein.

11. Self-supporting body according to Claim 8 or 9, **characterized in that** the bottom portion and/or the cheek portions are formed at least partially by attached sheet-metal stampings (18-21) which, together with body wall parts, form hollow-profile members.

12. Self-supporting body according to Claim 11, **characterized in that**, together with a rear end plate (22), the attached sheet-metal stampings form hollow-profile members.

13. Self-supporting body according to Claim 12, **characterized in that** at least one of the attached sheet-metal stampings is shifted into the body interior, preferably in the manner of a loading edge plate.

14. Self-supporting body according to Claim 12, **characterized in that** at least one of the attached sheet-metal stampings is placed onto the rear end plate (22) from outside.

15. Self-supporting body according to Claim 14, **characterized in that** the spatial arrangement of the attached sheet-metal stampings (20, 21) is selected such that they can be covered by a bumper arrangement.

16. Self-supporting body according to Claim 15, **characterized in that** the attached sheet-metal stampings (20, 21) are designed for receiving a bumper arrangement.

17. Self-supporting body according to Claim 1 or 4, **characterized in that** at least part-regions of two cheek portions are an integral part of a side-wall inner part.

18. Self-supporting body according to Claim 17, **characterized in that**
- the side-wall inner part (25) is produced by the tailored-blank technique,
- the sheet-metal portions (25.1, 25.2) assigned to the U-frames (11, 12) have a greater sheet-metal thickness and/or strength than a middle region (25.3) arranged between these.

19. Self-supporting body at least according to one of Claims 1-18, **characterized in that** at least one of the U-frames (11, 12) is widened in the roof region to form an O-frame.

20. Self-supporting body according to Claim 19, **characterized in that**, to produce the O-frame, a roof crossmember (10) is provided, the lateral ends of which are designed to be fastened to the free ends of the cheek portions (11b, 11c and 12b, 12c).

21. Self-supporting body according to Claim 1, **characterized in that** the bottom portion of at least one of the U-frames (11, 12) is formed by a roof crossmember (10a).

22. Self-supporting body according to Claim 1, **characterized in that** the side-wall profile part is formed by a sill (28).

## Revendications

1. Carrosserie (1) autoportante pour un véhicule, présentant des pièces profilées creuses de support (2 - 10) qui sont composées de pièces en tôle emboutie assemblées au moyen d'au moins une technique d'assemblage, **caractérisée en ce que**
- au moins deux cadres en U (11, 12) sont disposés l'un derrière l'autre dans le sens de la longueur du véhicule,
- des parties de base (11a, 12a) des cadres en U (11, 12) sont associées à une zone du fond ou à une zone du toit de la carrosserie (1),
- des parties de flanc (11b, 11c et 12b, 12c) des cadres en U (11, 12) partant de la région du fond ou de la région du toit sont formés jusque sur et/ou dans la région du toit ou la région du fond en se prolongeant en des colonnes essentiellement verticales de flancs latéraux (6-9),
- les cadres en U (11, 12) sont reliés directement l'un en à l'autre au moins dans la région des extrémités libres des parties de flanc ou au moyen d'une pièce profilée plate de paroi latérale ou de côté (15 ou 28) qui est placée sur le cadre en U ou les cadres en U (11, 12) au moins par parties à l'aide d'une technique d'assemblage ou qui sert de support à ces derniers.

2. Carrosserie autoportante selon la revendication 1, **caractérisée en ce que** dans la zone du toit, les pièces de tôle emboutie des cadres en U (11, 12) sont reliées l'une à l'autre de manière à obtenir dans une vue latérale du véhicule un agencement en forme de V inversé.

3. Carrosserie autoportante selon la revendication 2, **caractérisée en ce qu'**au moins des parties des parties de flanc (11b, 11c et 12b, 12c) sont intégrées dans au moins une paroi latérale d'une colonne verticale (4 - 9).

4. Carrosserie autoportante selon la revendication 1, **caractérisée** en ce dans une vue latérale, il est prévu un agencement essentiellement parallèle des cadres en U (11, 12).

5. Carrosserie autoportante selon la revendication 4, **caractérisée en ce que** la partie de paroi latérale plate (15) présente une extension verticale depuis une ligne de ceinture du véhicule jusque sur ou dans la zone du toit.

6. Carrosserie autoportante selon la revendication 4 ou 5, **caractérisée en ce que** la partie de paroi latérale est une vitre de fenêtre (15).

7. Carrosserie autoportante selon la revendication 6, **caractérisée en ce que** la vitre de fenêtre (15) est collée au moins sur des parties de la partie de flanc (11b, 11c ou 12b, 12c).

8. Carrosserie autoportante selon au moins l'une des revendications 1 à 7, **caractérisée en ce qu'**au moins l'un des cadres en U (11, 12) est configuré comme support continu.

9. Carrosserie autoportante selon au moins l'une des revendications 1 à 7, **caractérisée en ce qu'**au moins l'un des cadres en U (11, 12) présente dedans la zone de la partie de fond (11a, 12a) une découpe dont la longueur est inférieure à la moitié de l'extension de la ligne centrale de la partie de fond.

10. Carrosserie autoportante selon la revendication 8, **caractérisée en ce que**
- la partie de fond (11a) est formée par une traverse (16) du véhicule,
- la partie de flanc
- est créée dans une partie située en dessous de la ligne de ceinture, par une pièce en tôle emboutie placée qui, partant de la traverse de véhicule (16), couvre une coquille (17) de logement de roue pour se prolonger jusque dans l'une des colonnes de paroi latérale (6 - 9),
- dans une zone située au-dessus de la ligne de ceinture, est formée par la colonne de paroi latérale (6 - 9) proprement dite et/ou par des profilés qui y sont insérés.

11. Carrosserie autoportante selon la revendication 8 ou 9, **caractérisée en ce que** la partie de fond et/ou les parties de flanc sont formées au moins en partie par des pièces en tôle emboutie placées (18 - 21) qui forment des profilés creux de support avec des parties de la paroi de la carrosserie.

12. Carrosserie autoportante selon la revendication 11, **caractérisée en ce que** les pièces en tôle emboutie posées forment des profilés creux de support avec une tôle (22) de fermeture arrière.

13. Carrosserie autoportante selon la revendication 12, **caractérisée en ce qu'**au moins l'une des pièces en tôle emboutie placées est déplacée vers l'intérieur de la carrosserie, de préférence à la manière d'une tôle de charge.

14. Carrosserie autoportante selon la revendication 12, **caractérisée en ce qu'**au moins l'une des pièces en tôle emboutie posées est posée par l'extérieur sur la tôle (22) de fermeture arrière.

15. Carrosserie autoportante selon la revendication 14, **caractérisée en ce que** l'agencement spatial des pièces en tôle emboutie placées (20, 21) est sélectionné de telle sorte qu'elles puissent être couvertes par un agencement de pare-chocs.

16. Carrosserie autoportante selon la revendication 15, **caractérisée en ce que** les pièces de tôle estampée placées (20, 21) sont destinées à recevoir un agencement de pare-chocs.

17. Carrosserie autoportante selon la revendication 1 ou 4, **caractérisée en ce qu'**au moins des parties de deux parties de flanc font partie intégrante d'une partie intérieure de paroi latérale.

18. Carrosserie autoportante selon la revendication 17, **caractérisée en ce que**
- la partie intérieure (25) de paroi latérale est réalisée par une technique de flan sur mesure,
- les parties de tôle (25.1, 25.2) associées aux cadres en U (11, 12) présente une épaisseur de tôle et/ou une résistance mécanique plus grandes qu'une partie centrale (25.3) disposée entre ces parties.

19. Carrosserie autoportante selon au moins l'une des revendications 1 à 18, **caractérisée en ce qu'**au moins l'un des cadres en U (11, 12) est prolongé en un cadre en O dans la zone du toit.

20. Carrosserie autoportante selon la revendication 19, **caractérisée en ce que** pour réaliser le cadre en O, il est prévu une traverse de toit (10) dont les extrémités latérales sont redressés pour être fixées aux extrémités libres des parties de flanc (11.b. 11c ou 12.b, 12c).

21. Carrosserie autoportante selon la revendication 1, **caractérisée en ce que** la partie de fond d'au moins l'un des cadres en U (11, 12) est formée par une traverse de toit (10a).

22. Carrosserie autoportante selon la revendication 1, **caractérisée en ce que** la pièce profilée de paroi latérale est formée par un encadrement (28).
